# EUROPEAN PATENT SPECIFICATION

(11) **EP 4 542 207 B1**
(45) Date of publication and mention of the grant of the patent: **01.07.2026**
(21) Application number: 24383139.3
(22) Date of filing: 17.10.2024
(51) Int. Cl.: G01N 21/94, G01N 21/958, H02S 50/15

(54) **DEVICE FOR MONITORING DIRT ON A SURFACE**
VORRICHTUNG ZUR ÜBERWACHUNG VON SCHMUTZ AUF EINER OBERFLÄCHE
DISPOSITIF DE SURVEILLANCE DE SALISSURES SUR UNE SURFACE

(30) Priority: 17.10.2023 ES 202331848 U
(43) Date of publication of application: 23.04.2025
(73) Proprietor: Sterna Innovation Projects, SL, 17001 Girona (ES)
(72) Inventor: TORRENT POCH, Marc, 17001 Girona (ES); PELACH DE RIBOT, Rafel, 17001 Girona (ES)
(74) Representative: Isern Patentes y Marcas S.L.

(56) References cited:
- WO-A1-2020/051932
- US-A1- 2020 127 603
- US-A1- 2020 282 657
- US-A1- 2022 082 512

## Description

### Technical field of the invention

The present invention relates to a device for monitoring dirt deposited on an outdoor surface, preferably on the surface of a photovoltaic panel associated with the device, and more particularly it relates to a device comprising a casing with a transparent face exposed to dirt, one or more brightness sensors and one or more light sources arranged inside the casing, as well as a screen that allows the brightness sensor(s) and the light source(s) to be selectively covered for calibration thereof.

### Background of the invention

Currently, the increase in demand for renewable energy is very notable and, in particular, the demand for solar energy, both photovoltaic and thermal, is one of those that has experienced the most significant growth. Furthermore, current techniques for building photovoltaic solar cells and panels have achieved a qualitative increase in efficiency by improving the chemical-physical properties of solar cells. This increase in power per unit of surface area leads to a lower environmental impact in large projects involving solar photovoltaic platforms by reducing the surface area affected by their development. The recent reduction in the cost of producing solar panels and the improvement in their performance leads to new scenarios for making the square metre of collecting surface more profitable by using roofs, terraces, etc., of industrial warehouses and other buildings for the installation of photovoltaic panels.

However, a limitation inherent to all collecting systems, which is very difficult to solve, is the reduction in performance caused by the deposition of dust and other types of dirt on the collecting surface of the panel. When the accumulation of dust is small, the influence of dust on the performance of the installation is insignificant; however, since these types of installations are almost always outdoors and exposed to the elements, an accumulation of dirt invariably occurs, which prevents the transmission of radiation to the sensitive elements of the cells.

In general, to counteract this effect, regular cleaning of an installation's panels, which are often in remote locations, should be carried out, but since this operation requires considerable time and labour, it is advisable to restrict these operations to the bare minimum. In some situations, fully or partially automated systems can be used for cleaning, but even in these cases it is desirable to limit their frequency so as not to waste resources. It is possible to determine an optimal cleaning frequency that maximises energy production and minimises resource use, but to do so it is important to reliably determine the degree of soiling of the installation's panels at any given time.

The prior art document US2020/127603 A1 relates to a solar energy detection module and a solar panel. WO2020/051932 A1 discloses a dust detection device, a corresponding solar cell system, and an evaluation method. US2022/082512 A1 concerns a method and a device for determining the soiling of a shield. US2020/282657 A1 discloses techniques for detecting contamination in additive fabrication systems and related methods.

Therefore, there is a need for a device capable of reliably determining the degree of soiling of a surface that improves the equipment and solutions known in the field of solar energy and in particular photovoltaic generation.

### Description of the invention

The present invention proposes a solution to the foregoing problems by means of a device for monitoring dirt on a surface according to claim 1, and a photovoltaic panel with said device according to claim 13.

In a first inventive aspect, the invention provides *a device for monitoring dirt on a surface,*
*characterised in that the device comprises at least one brightness sensor, at least one light source, control means configured to control the brightness sensor and the light source, and a casing; wherein*
   *the casing has a parallelepiped configuration, with one of its faces being a transparent face,*
   *the brightness sensor and the light source are arranged inside the casing, with the brightness sensor and the light source oriented towards the transparent face, and*
*wherein the device further comprises*
   *a screen and drive means configured to move the screen between a first position placed between the transparent face and the brightness sensor and the light source* preventing the passage of direct radiation to the brightness sensor *and a second position in which the screen allows* radiation *to pass freely to the brightness sensor through the transparent face, wherein control means are also configured to control the drive means.*

Throughout this document, it will be understood that the device object of the present invention allows the qualitative or quantitative detection and determination over time of the amount of dirt deposited on a surface, in particular on the transparent face of the casing. This measurement can be used to estimate the amount of dirt deposited on a surface located near the device and oriented towards the surface substantially parallel to the transparent face of the device. Dirt will be understood as any solid or liquid substance capable of adhering to a surface or leaving a stain on it that reduces the amount of radiation, particularly solar radiation, that reaches the surface. Examples of dirt are dust, pollen, sand, or salt. It should be understood that the device is applicable to any type of surface for which the amount of dirt deposited is to be known, including but not limited to, panels for capturing solar energy, such as thermal solar energy panels and photovoltaic solar energy panels.

Brightness sensor, illumination sensor, or photodetector should be understood as any element sensitive to light radiation that is capable of emitting a signal based on the radiation received. In a preferred example, the brightness sensor comprises a charge-coupled device, CCD, a pixel sensor with CMOS technology and/or a photodiode; preferably, the sensor(s) used can be sensors sensitive to one or more frequency bands of the electromagnetic spectrum (e.g., visible, infrared and/or ultraviolet band). Luminous source, light source, or illumination source should be understood as any element that is capable of emitting light in a controlled manner, and in a preferred example, the light source comprises a photoluminescent diode, LED, and in another, a filament lamp. Casing is understood to be any type of housing, box, envelope or substantially hollow cover that offers protection against the elements and a structural support for at least some elements of the device. By virtue of its parallelepiped configuration, the casing comprises a plurality of casing faces or walls, of which one of them must be made of a transparent material. Transparent is understood as either translucent or partially or totally transparent to light radiation, this including one or more ranges of the electromagnetic spectrum between ultraviolet and infrared. In a preferred example, the transparent face is a rectangular glass plate or sheet; in another example, it is a polymethyl methacrylate sheet, PMMA; and in yet another example, it is a polycarbonate sheet.

A screen should be understood as a mobile element capable of preventing the passage of direct radiation, in particular, preventing the incidence of direct solar radiation on at least the brightness sensors after the radiation passes through the transparent face. The screen can be moved in a controlled manner between a first and a second position, wherein in the first position the screen prevents the passage of radiation, and in the second position it allows radiation to access the at least one brightness sensor. In a preferred example, the screen is a substantially opaque thin plate or sheet with dimensions and configuration comparable to the transparent face. The screen is able to move between the first and second positions by means of drive means capable of applying a force to the screen. In one example, the drive means are electrically driven, and in another example, they are pneumatically driven. Furthermore, it will be understood that the screen comprises an outer face, oriented towards the transparent face, and an inner face, opposite the outer face, and oriented towards the brightness sensor(s) and the light source(s).

The drive means, the at least one brightness sensor, and the at least one light source are controlled, that is, selectively activated and deactivated with control means, which in a preferred example comprise a programmable computer, and which are also preferably capable of receiving and processing signals originating from or directed to the foregoing elements.

Advantageously, the device object of the present invention allows obtaining a measurement of the amount of light that passes through the transparent face of the casing. The amount of light that passes through the transparent face is based on the amount of dirt accumulated on it, so the amount of dirt can be calculated from the variation in brightness detected in the brightness sensor(s). Since the transparent face of the casing is exposed to a proportional amount of dirt as a surface under study, for example the surface of a photovoltaic panel, the transparent face can be used as a reference surface. Furthermore, the device advantageously allows improving the measurement of the quantity of deposited dirt by calibrating the device by means of a reference measurement obtained by placing the screen between the transparent face and the brightness sensor and illuminating the inner face of the screen with the at least one light source. In this way, the light radiation emitted by the light source(s) illuminates the inner face of the screen and the space formed between it and the brightness sensor(s) under known conditions, such that its measurement can be used as a reference to calibrate the device.

Furthermore, it is also possible to determine the type and nature of the accumulated dirt through a spectral analysis of the light signal. For this, the invention can analyse radiation at different bands (e.g., visible, infrared and/or ultraviolet) to perform this analysis.

In a particular embodiment, *the drive means comprise a rack-and-pinion mechanism configured to move the screen parallel to the transparent face, wherein the rack is rigidly attached to the screen and the drive means are configured to transmit a rotation movement to the pinion.* In another embodiment, the drive means comprise a pneumatic or hydraulic piston arranged parallel to the direction of movement of the screen. Advantageously, the rack-and-pinion mechanism provides a compact actuator that allows a circular movement to be transformed into a longitudinal movement.

In a particular embodiment, *the drive means comprise a gear-and-pinion mechanism configured to move the screen with a circular movement parallel to the transparent face, wherein the gear is rigidly attached to the screen and the drive means are configured to transmit a rotation movement to the pinion.* Advantageously, the gear-and-pinion mechanism provides a simple actuator that allows the screen to be selectively moved with a fan movement.

In one embodiment, the device comprises electrical connections configured to connect the device to an external electrical power source, for example, to an adjacent photovoltaic panel, or a low voltage electricity grid.

In a particular embodiment, *the screen comprises a photovoltaic cell oriented towards the transparent face, wherein the photovoltaic cell is configured to power the device.* Preferably, the photovoltaic cell is arranged on the outer face of the screen, so that it can receive light radiation regardless of the position of the screen. Advantageously, the photovoltaic cell makes it possible to supply electrical power to the device independently.

In a particular embodiment, the device *further comprises a battery configured to power the device.* Advantageously, the battery allows the device to be supplied with electrical power independently throughout the day and night.

In a particular embodiment, *the at least one brightness sensor and the at least one light source are arranged on a printed circuit board arranged parallel to the transparent face.* In another embodiment, the control means, the drive means, or both, are arranged on the printed circuit board. Advantageously, the printed circuit board offers reliable electronic connections and a support for the brightness sensor and the light source.

In a particular embodiment, *the printed circuit board comprises at least one slot arranged parallel to the direction of movement of the screen, wherein the at least one slot is configured to guide the movement of the screen.* In another embodiment, the casing comprises at least one slot arranged parallel to the direction of movement of the screen, configured to guide the movement of the screen. In yet another embodiment, the printed circuit board, the casing, or both, comprise slots configured to guide the movement of the screen. Advantageously, slots provide a guide for directing longitudinal movement of the screen, and a firm support for the same. In a preferred embodiment, the screen comprises protrusions with a configuration complementary to the slot, and which form, together with the slots, a sliding mechanism.

In a particular embodiment, the device *comprises a plurality of brightness sensors, a plurality of light sources, or both.* Advantageously, a plurality of brightness sensors makes it possible to obtain a set of brightness measurements distributed over a wide surface, which achieve a more precise measurement of brightness. Correspondingly, a set of light sources makes it possible to homogeneously illuminate a larger space than a single source.

In one embodiment, *one or more of the brightness sensors are sensors sensitive to one or more frequency bands of the electromagnetic spectrum* (e.g., visible, infrared, and/or ultraviolet band). In another embodiment, *one or more of the light sources emit radiation in one or more frequency bands of the electromagnetic spectrum* (e.g., visible, infrared and/or ultraviolet band). In one embodiment, there may be one or more light sources for each brightness sensor, and the at least one light source may emit at different frequencies of the electromagnetic spectrum including visible spectrum bands, infrared bands, and ultraviolet bands.

In a particular embodiment, *one or more of the light sources, or of the brightness sensors, or both, are oriented perpendicularly with respect to the transparent face, or are oriented at 45° with respect to the transparent face, or a combination of both.* In this document, it should be understood that a light source is oriented according to its main direction of radiation emission, that is, in a direction in which it emits a greater luminous flux. Similarly, a brightness sensor is oriented according to its main direction of detection, that is, in a direction in which the detected signal is stronger.

In a particular embodiment, the device *further comprises wireless communication means configured to establish bidirectional data communication between the control means and remote computing means, which in turn are configured to execute machine learning models, to operate with blockchains, or both.* The wireless communication means allow transmitting control and brightness measurement (or amount of dirt) signals to and from other devices, such as data servers or computer networks; preferably, the wireless communication means comprise Internet of Things (IoT) technology, and allow data communication to be established between the device and one or more computers via the Internet. In a preferred embodiment, the device is in data communication with a server comprising computer programs that, when executed, implement a machine learning model, or artificial intelligence, configured to process at least the data received from the device. Additionally, the server is configured to add or consult information in one or more blockchains.

In a second inventive aspect, the invention provides a *photovoltaic panel comprising a plurality of coplanar photovoltaic cells and a device for monitoring dirt on a surface according to any one of the preceding claims, wherein the device is arranged with the transparent face parallel to the plane formed by the photovoltaic cells of the photovoltaic panel, and with the transparent face oriented towards the origin of the light radiation powering the photovoltaic panel.* Advantageously, the device can be used together with a conventional photovoltaic panel to monitor the amount of dirt deposited on the panel over a given range of time, preferably by arranging the device with its transparent face coplanar or substantially parallel to the active face of the panel and in a peripheral area of the panel, for example, in a corner, so that the device does not impede the panel's collection of radiation.

In other embodiments, the device is mounted or arranged next to a thermal solar panel for hot water production, or next to a thermal solar collector of a solar thermal installation, in a manner similar to that described for a photovoltaic panel.

These and other features and advantages of the invention will be evident in light of the description of preferred, but not exclusive, embodiments which are illustrated by way of nonlimiting example in the drawings which are attached.

### Brief description of the drawings

- Figure 1: This figure shows a perspective view of a preferred embodiment of the device.
- Figure 2: This figure shows a perspective view of the foregoing preferred embodiment of the device, with the casing removed to show its interior.

### Detailed description of an exemplary embodiment

In the following detailed description, numerous specific details are set forth in the form of examples to provide a thorough understanding of the relevant teachings. However, it will be apparent to those skilled in the art that the present teachings can be implemented without such details.

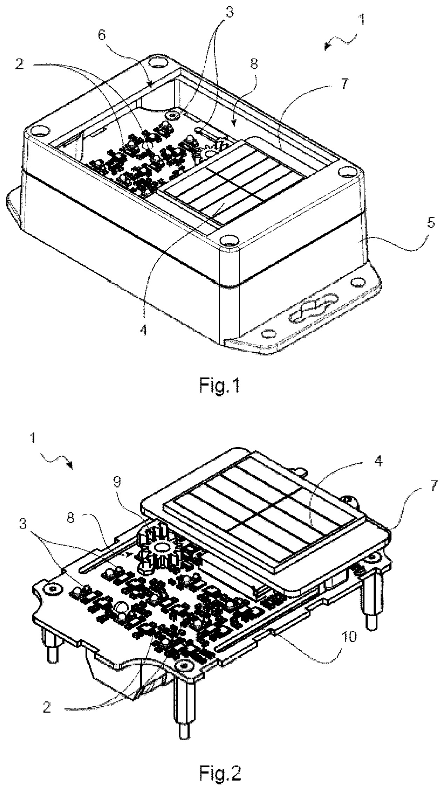

Figure 1 shows a preferred exemplary embodiment of the device (1) for monitoring dirt on a surface; in particular, the described example is adapted to monitor dirt on a photovoltaic panel, as will be described later. Figure 1 shows the device (1) with a casing (5) with a substantially rectangular prism configuration, made of conventional polymer material, which transparent face (6), made of PMMA, is shown oriented upwards in the figure, and which allows the interior of the device to be observed. In other examples, the transparent face (6) is made of polycarbonate. It shows, arranged on a printed circuit board, a set of brightness sensors (2) and light sources (3) evenly distributed over the printed circuit board (to facilitate viewing, only two units of each element are referenced). The light sources (3) are light-emitting diodes, LEDs, and the brightness sensors (2) are active pixel sensors with complementary metal oxide semiconductor, CMOS, technology with a sensitivity range centred on the visible spectrum. In other examples, the light sources (3) emit in the infrared spectrum, and the brightness sensors (2) have their greatest sensitivity in the infrared spectrum, and in still other examples, the brightness sensors (2) and the light sources (3) work in other bands of the spectrum, for example in ultraviolet, or in several bands at once.

The screen (7) is also shown, arranged in the second position, or retracted position, in which the brightness sensors (2) and the light sources (3) are exposed to sunlight. The screen (7) has a rectangular plate configuration, made of opaque polymer material, and comprises a small photovoltaic cell (4) arranged on its outer face. The photovoltaic cell (4) is connected to the printed circuit board, and allows it to be powered with electricity without having to connect the device to the electricity grid or to the photovoltaic panel next to which it is mounted. Figure 1 also partially shows the drive means (8), arranged under the screen (7).

Figure 2 shows a perspective view of the same device (1) from another angle. In this view, the representation of the casing (5) has been omitted, including the transparent face (6) in order to be able to see the details of the interior of the device (1). This figure shows, in addition to the arrangement of the brightness sensors (2) and the light sources (3), the particular assembly of the drive means (8), which comprise a rack-and-pinion mechanism (9) and slots (10) made in the printed circuit board and which facilitate the movement of the screen (7). In an exemplary embodiment, the brightness sensors (2) and the light sources (3) are arranged on the printed circuit board and are oriented perpendicular to the plane formed by the same, that is, with the direction of greatest light sensitivity or with greatest emission power and oriented perpendicular to the transparent face (6). In this way, the radiation emitted or detected is reflected forming a right angle with respect to the transparent face (6). In another exemplary embodiment, the brightness sensors (2) and the light sources (3) are arranged on the printed circuit board and oriented at 45° to the plane formed by the same, that is, with the direction of greatest light sensitivity or with greatest emission power and oriented so that the radiation emitted or received is reflected on the transparent face (6) at 45°.

The drive means (8) in this example comprise a rack-and-pinion assembly (9), wherein the rack is rigidly attached to the screen (7), and the pinion is rotatably attached to the printed circuit board. In the example, the pinion is driven by an electric motor that, when rotating, causes a linear movement in the rack, which in turn drags the screen (7). In this way, the screen (7) can move from the second position to the first position.

In other examples, not shown in the figures, the drive means (8) comprise a gear-and-pinion mechanism configured to move the screen (7) with a circular movement parallel to the transparent face (6). In these examples, the gear is rigidly attached to the screen (7), and the pinion is rotatably attached to the printed circuit board. As in the previous example, the pinion is driven by an electric motor that, when rotating, causes a circular movement in the screen (7), or fan movement. In this way, the screen (7) can move from the second position to the first position.

The example shown also comprises two slots (10) made in the printed circuit board, along each of the longer sides of the board and close to its edges, which coincide with the direction of movement of the screen (7), and at the same time they are parallel to the longer edges of the casing (5). In this example, the screen (7) comprises two protrusions arranged on respective shorter sides of the screen (7), and which project from its inner face, with a configuration complementary to the slots (10), and which allows the movement thereof.

Figure 2 also shows a conventional battery placed on the opposite face of the printed circuit board, which allows the device (1) to be powered with electricity without having to connect the device to the electricity grid, even when the photovoltaic cell (4) does not generate electricity.

The device (1) of the example also comprises control means, not shown in the figures, configured to control the brightness sensors (2) and the light sources (3). In the example, the control means are implemented by means of a connected conventional microprocessor, which, in addition to controlling the operation of the brightness sensors (2) and the light sources (3), is capable of controlling the drive means (8), and correspondingly control the movement of the screen (7), process the signals generated by the brightness sensors (2), and carry out the processes necessary to calibrate the device (1).

The device (1) of the example further comprises wireless communication means of IoT technology, not shown in the figures, and which allow establishing data communication between the device (1) and a data network, for example, the Internet. The device (1) is particularly configured to communicate with a remote server in which there are one or more machine learning models configured to process the information or signals generated from the brightness sensors (2). The remote server also allows operating with blockchains, to which blocks can be added, or where information can be extracted from one or more blocks.

The device (1) is adapted for use in combination with a photovoltaic panel, not shown in the figures, which active surface is to be monitored. For this purpose, a device (1) like the one described above is installed in a peripheral portion of the photovoltaic panel, with the transparent face (6) substantially parallel to the active face of the photovoltaic panel. This can be achieved, for example, by means of an anchor that firmly attaches the casing (5) of the device (1) to the structure of the photovoltaic panel, adjacent to the frame of the photovoltaic panel.

## Claims

1. A device (1) for monitoring dirt on a surface, **characterised in that** the device (1) comprises at least one brightness sensor (2), at least one light source (3), control means configured to control the brightness sensor (2) and the light source (3), and a casing (5); wherein
the casing (5) has a parallelepiped configuration, with one of its faces being a transparent face (6),
the brightness sensor (2) and the light source (3) are arranged inside the casing (5), with the brightness sensor (2) and the light source (3) oriented towards the transparent face (6), and
wherein the device (1) further comprises
a screen (7) and drive means (8) configured to move the screen (7) between a first position placed between the transparent face (6) and the brightness sensor (2) and the light source (3) preventing the passage of direct radiation to the brightness sensor (2) and a second position in which the screen (7) allows radiation to pass freely to the brightness sensor (2) through the transparent face (6), wherein control means are also configured to control the drive means (8).

2. The device (1) according to the preceding claim, wherein the drive means (8) comprise a rack-and-pinion mechanism (9) configured to move the screen (7) parallel to the transparent face (6), wherein the rack is rigidly attached to the screen (7) and the drive means (8) are configured to transmit a rotation movement to the pinion.

3. The device (1) according to claim 1, wherein the drive means (8) comprise a gear-and-pinion mechanism configured to move the screen (7) with a circular movement parallel to the transparent face (6), wherein the gear is rigidly attached to the screen (7) and the drive means (8) are configured to transmit a rotation movement to the pinion.

4. The device (1) according to any of the preceding claims, wherein the screen (7) comprises a photovoltaic cell (4) oriented towards the transparent face (6), wherein the photovoltaic cell (4) is configured to power the device (1).

5. The device (1) according to any of the preceding claims, further comprising a battery configured to power the device (1).

6. **The** device (1) according to any of the preceding claims, wherein the at least one brightness sensor (2) and the at least one light source (3) are arranged on a printed circuit board (9) arranged parallel to the transparent face (6).

7. **The** device (1) according to the preceding claim, wherein the printed circuit board (9) comprises at least one slot (10) arranged parallel to the direction of movement of the screen (7), wherein the at least one slot (10) is configured to guide the movement of the screen (7).

8. **The** device (1) according to any of the preceding claims, comprising a plurality of brightness sensors (2), a plurality of light sources (3), or both.

9. **The** device (1) according to any of the preceding claims, wherein one or more of the brightness sensors (2) are sensors sensitive to one or more frequency bands of the electromagnetic spectrum.

10. The device (1) according to any of the preceding claims, wherein one or more of the light sources (3) emit radiation in one or more frequency bands of the electromagnetic spectrum.

11. The device (1) according to any of the preceding claims, wherein one or more of the brightness sensors (2), or of the light sources (3), or both, are oriented perpendicularly with respect to the transparent face (6), or are oriented at 45° with respect to the transparent face (6), or a combination of both.

12. The device (1) according to any of the preceding claims, further comprising wireless communication means configured to establish bidirectional data communication between the control means and remote computing means, which in turn are configured to execute machine learning models, to operate with blockchains, or both.

13. A photovoltaic panel comprising a plurality of coplanar photovoltaic cells and a device (1) for monitoring dirt on a surface according to any one of the preceding claims, wherein the device is arranged with the transparent face (6) parallel to the plane formed by the photovoltaic cells of the photovoltaic panel, and with the transparent face (6) oriented towards the origin of the light radiation powering the photovoltaic panel.

## Patentansprüche

1. Vorrichtung (1) zur Überwachung von Schmutz auf einer Oberfläche, **dadurch gekennzeichnet, dass** die Vorrichtung (1) mindestens einen Helligkeitssensor (2), mindestens eine Lichtquelle (3), Steuerungsmittel, die dazu konfiguriert sind, den Helligkeitssensor (2) und die Lichtquelle (3) zu steuern, und ein Gehäuse (5) umfasst; wobei
das Gehäuse (5) eine quaderförmige Konfiguration aufweist, wobei eine seiner Flächen eine transparente Fläche (6) ist,
der Helligkeitssensor (2) und die Lichtquelle (3) im Inneren des Gehäuses (5) angeordnet sind, wobei der Helligkeitssensor (2) und die Lichtquelle (3) auf die transparente Fläche (6) ausgerichtet sind, und
wobei die Vorrichtung (1) ferner Folgendes umfasst
einen Bildschirm (7) und Antriebsmittel (8), die dazu konfiguriert sind, den Bildschirm (7) zwischen einer ersten Position, in der er sich zwischen der transparenten Fläche (6) und dem Helligkeitssensor (2) sowie der Lichtquelle (3) befindet und den Durchgang direkter Strahlung zum Helligkeitssensor (2) verhindert, und einer zweiten Position zu bewegen, in der der Bildschirm (7) den freien Durchgang von Strahlung zum Helligkeitssensor (2) durch die transparente Fläche (6) ermöglicht, wobei Steuerungsmittel ebenfalls dazu konfiguriert sind, die Antriebsmittel (8) zu steuern.

2. Vorrichtung (1) nach dem vorhergehenden Anspruch, wobei die Antriebsmittel (8) einen Zahnstangen-RitzelMechanismus (9) umfassen, der dazu konfiguriert ist, den Bildschirm (7) parallel zur transparenten Fläche (6) zu bewegen, wobei die Zahnstange starr am Bildschirm (7) befestigt ist und die Antriebsmittel (8) dazu konfiguriert sind, eine Drehbewegung auf das Ritzel zu übertragen.

3. Vorrichtung (1) nach Anspruch 1, wobei die Antriebsmittel (8) einen Zahnrad- und Ritzelmechanismus umfassen, der dazu konfiguriert ist, den Bildschirm (7) in einer kreisförmigen Bewegung parallel zur transparenten Fläche (6) zu bewegen, wobei das Zahnrad starr an dem Bildschirm (7) befestigt ist und die Antriebsmittel (8) dazu konfiguriert sind, eine Drehbewegung auf das Ritzel zu übertragen.

4. Vorrichtung (1) nach einem der vorhergehenden Ansprüche, wobei der Bildschirm (7) eine Photovoltaikzelle (4) umfasst, die zur transparenten Fläche (6) hin ausgerichtet ist, wobei die Photovoltaikzelle (4) dazu konfiguriert ist, die Vorrichtung (1) mit Strom zu versorgen.

5. Vorrichtung (1) nach einem der vorhergehenden Ansprüche, ferner umfassend eine Batterie, die dazu konfiguriert ist, die Vorrichtung (1) mit Strom zu versorgen.

6. Vorrichtung (1) nach einem der vorhergehenden Ansprüche, wobei der mindestens eine Helligkeitssensor (2) und die mindestens eine Lichtquelle (3) auf einer Leiterplatte (9) angeordnet sind, die parallel zur transparenten Fläche (6) angeordnet ist.

7. Vorrichtung (1) nach dem vorhergehenden Anspruch, wobei die Leiterplatte (9) mindestens einen Schlitz (10) umfasst, der parallel zur Bewegungsrichtung des Bildschirms (7) angeordnet ist, wobei der mindestens eine Schlitz (10) dazu konfiguriert ist, die Bewegung des Bildschirms (7) zu führen.

8. Vorrichtung (1) nach einem der vorhergehenden Ansprüche, umfassend eine Vielzahl von Helligkeitssensoren (2), eine Vielzahl von Lichtquellen (3) oder beides.

9. Vorrichtung (1) nach einem der vorhergehenden Ansprüche, wobei einer oder mehrere von den Helligkeitssensoren (2) Sensoren sind, die auf ein oder mehrere Frequenzbänder des elektromagnetischen Spektrums ansprechen.

10. Vorrichtung (1) nach einem der vorhergehenden Ansprüche, wobei eine oder mehrere von den Lichtquellen (3) Strahlung in einem oder mehreren Frequenzbändern des elektromagnetischen Spektrums aussenden.

11. Vorrichtung (1) nach einem der vorhergehenden Ansprüche, wobei einer oder mehrere von den Helligkeitssensoren (2) oder den Lichtquellen (3) oder beide senkrecht in Bezug auf die transparente Fläche (6) ausgerichtet sind oder in Bezug auf die transparente Fläche (6) in einem Winkel von 45° ausgerichtet sind oder eine Kombination aus beidem.

12. Vorrichtung (1) nach einem der vorhergehenden Ansprüche, ferner umfassend drahtlose Kommunikationsmittel, die dazu konfiguriert sind, eine bidirektionale Datenkommunikation zwischen den Steuerungsmitteln und Fernrechenmitteln herzustellen, die wiederum dazu konfiguriert sind, Maschinenlernmodelle auszuführen, mit Blockchains zu arbeiten oder beides.

13. Photovoltaikmodul, umfassend eine Vielzahl koplanarer Photovoltaikzellen und eine Vorrichtung (1) zur Überwachung von Schmutz auf einer Oberfläche nach einem der vorhergehenden Ansprüche, wobei die Vorrichtung mit der transparenten Fläche (6) parallel zu der von den Photovoltaikzellen des Photovoltaikmoduls gebildeten Ebene angeordnet ist und wobei die transparente Fläche (6) zum Ursprung der das Photovoltaikmodul speisenden Lichtstrahlung hin ausgerichtet ist.

## Revendications

1. Dispositif (1) de surveillance de salissures sur une surface, **caractérisé en ce que** le dispositif (1) comprend au moins un capteur de luminosité (2), au moins une source de lumière (3), des moyens de commande conçus pour commander le capteur de luminosité (2) et la source de lumière (3), et un boîtier (5) ; dans lequel
le boîtier (5) a une forme parallélépipédique, une de ses faces étant une face transparente (6),
le capteur de luminosité (2) et la source de lumière (3) sont agencés à l'intérieur du boîtier (5), le capteur de luminosité (2) et la source de lumière (3) étant orientés vers la face transparente (6), et
dans lequel le dispositif (1) comprend en outre
un écran (7) et des moyens d'entraînement (8) conçus pour déplacer l'écran (7) entre une première position placée entre la face transparente (6) et le capteur de luminosité (2) et la source de lumière (3) empêchant le passage du rayonnement direct vers le capteur de luminosité (2), et une seconde position dans laquelle l'écran (7) permet au rayonnement de passer librement vers le capteur de luminosité (2) à travers la face transparente (6), dans lequel des moyens de commande sont également conçus pour commander les moyens d'entraînement (8).

2. Dispositif (1) selon la revendication précédente, dans lequel les moyens d'entraînement (8) comprennent un mécanisme à crémaillère et pignon (9) conçu pour déplacer l'écran (7) parallèlement à la face transparente (6), dans lequel la crémaillère est fixée de manière rigide à l'écran (7) et les moyens d'entraînement (8) sont conçus pour transmettre un mouvement de rotation au pignon.

3. Dispositif (1) selon la revendication 1, dans lequel les moyens d'entraînement (8) comprennent un mécanisme à crémaillère et pignon conçu pour déplacer l'écran (7) en mouvement circulaire parallèlement à la face transparente (6), dans lequel l'engrenage est fixé de manière rigide à l'écran (7) et les moyens d'entraînement (8) sont conçus pour transmettre un mouvement de rotation au pignon.

4. Dispositif (1) selon l'une quelconque des revendications précédentes, dans lequel l'écran (7) comprend une cellule photovoltaïque (4) orientée vers la face transparente (6), dans lequel la cellule photovoltaïque (4) est conçu pour alimenter le dispositif (1).

5. Dispositif (1) selon l'une quelconque des revendications précédentes, comprenant en outre une batterie conçue pour alimenter le dispositif (1).

6. Dispositif (1) selon l'une quelconque des revendications précédentes, dans lequel l'au moins un capteur de luminosité (2) et l'au moins une source de lumière (3) sont agencés sur une carte de circuit imprimé (9) agencée parallèlement à la face transparente (6).

7. Dispositif (1) selon la revendication précédente, dans lequel la carte de circuit imprimé (9) comprend au moins une fente (10) agencée parallèlement à la direction de déplacement de l'écran (7), dans lequel l'au moins une fente (10) est conçue pour guider le déplacement de l'écran (7).

8. Dispositif (1) selon l'une quelconque des revendications précédentes, comprenant une pluralité de capteurs de luminosité (2), une pluralité de sources de lumière (3), ou les deux.

9. Dispositif (1) selon l'une quelconque des revendications précédentes, dans lequel un ou plusieurs capteurs de luminosité (2) sont des capteurs sensibles à une ou plusieurs bandes de fréquences du spectre électromagnétique.

10. Dispositif (1) selon l'une quelconque des revendications précédentes, dans lequel une ou plusieurs des sources de lumière (3) émettent un rayonnement dans une ou plusieurs bandes de fréquences du spectre électromagnétique.

11. Dispositif (1) selon l'une quelconque des revendications précédentes, dans lequel un ou plusieurs des capteurs de luminosité (2), ou des sources de lumière (3), ou les deux, sont orientés perpendiculairement par rapport à la face transparente (6), ou sont orientés à 45° par rapport à la face transparente (6), ou une combinaison des deux.

12. Dispositif (1) selon l'une quelconque des revendications précédentes, comprenant en outre des moyens de communication sans fil conçus pour établir une communication bidirectionnelle de données entre les moyens de commande et des moyens informatiques à distance, qui sont à leur tour conçus pour exécuter des modèles d'apprentissage automatique, pour fonctionner avec des chaînes de blocs, ou les deux.

13. Panneau photovoltaïque comprenant une pluralité de cellules photovoltaïques coplanaires et un dispositif (1) de surveillance de salissures sur une surface, selon l'une quelconque des revendications précédentes, dans lequel le dispositif est agencé avec la face transparente (6) parallèle au plan formé par les cellules photovoltaïques du panneau photovoltaïque, et avec la face transparente (6) orientée vers la source du rayonnement lumineux alimentant le panneau photovoltaïque.
